# FASCICULE DE BREVET EUROPEEN

(11) **EP 3 851 336 B1**
(45) Date de publication et mention de la délivrance du brevet: **29.03.2023**
(21) Numéro de dépôt: 21150951.8
(22) Date de dépôt: 11.01.2021
(51) Int. Cl.: B60R 21/205

(54) **SYSTÈME D'ASSEMBLAGE D'UN CANAL D'AIRBAG AU TRAVERS D'UN PANNEAU SUPPORT**
SYSTEM ZUM MONTIEREN EINES AIRBAGKANALS DURCH EIN HALTEPANEEL
SYSTEM FOR ASSEMBLING AN AIRBAG CHANNEL THROUGH A SUPPORT PANEL

(30) Priorité: 20.01.2020 FR 2000520
(43) Date de publication de la demande: 21.07.2021
(73) Titulaire: SMRC Automotive Holdings Netherlands B.V., 1101 BA Amsterdam (NL)
(72) Inventeur: AUTEM, Laurent, 62860 SAINS-LES-MARQUION (FR); GERMAIN, Christophe, 62223 ANZIN ST AUBIN (FR); DUTOUQUET, Denis, 59246 MONS-EN-PEVELE (FR)
(74) Mandataire: Cabinet Nuss

(56) Documents cités:
- DE-A1-102015 208 241
- DE-A1-102015 208 823
- FR-A1- 2 942 436
- KR-A- 20160 005 176
- US-A1- 2003 234 521
- US-B1- 8 469 393

## Description

La présente invention se rapporte au système d'assemblage d'un canal d'airbag au travers d'un panneau support et plus particulièrement au système d'assemblage permettant une isolation, voire une étanchéification, des espaces positionnés de part et d'autre du panneau support d'un habillage intérieur de véhicule.

Dans l'habitacle d'un véhicule, les différents canaux d'airbag sont obturés par des volets et éventuellement recouvert d'un matériau coulé ou déposé par injection sur le volet et l'ensemble du panneau support d'habillage intérieur de véhicule au niveau duquel les canaux d'airbag sont positionnés. Ce matériau est également susceptible d'être recouvert d'un élément de décor dont la surface forme l'habillage extérieur de l'habitacle. Le matériau coulé ou déposé sous forme liquide permet d'obtenir, grâce à une certaine épaisseur, une homogénéité ou une continuité de surface sur l'ensemble du panneau support qui intègre un canal d'airbag. Cette homogénéité permet ainsi de masquer sous la peau de revêtement les différentes aspérités d'un relief se rapportant à la discontinuité de surface entre les différentes pièces assemblées que sont, par exemple, d'une part, le panneau support d'habillage intérieur et, d'autre part, le canal d'airbag et son volet d'obturation.

Lors de la dépose du matériau d'homogénéisation, celui est sous forme d'un liquide visqueux de façon à épouser au mieux les différentes surfaces qu'il recouvre. Cette viscosité permet également une dépose par injection ou coulage de ce matériau d'homogénéisation lorsque la surface à couvrir est cloisonnée dans une cavité adaptée. Une fois le matériau visqueux solidifié, l'ensemble des différentes pièces : panneau support, canal d'airbag et volet d'obturation, recouvert du matériau d'homogénéisation est retiré du dispositif de moule de coulage, de moussage ou d'injection.

Toutefois, lors de l'étape de coulage ou d'injection du matériau visqueux sur l'une des faces partagées de l'ensemble panneau support, canal d'airbag et volet d'obturation, il est nécessaire que le matériau demeure au niveau d'une même face et ne s'écoule pas entre les différentes pièces pour atteindre la seconde face de l'ensemble. En effet, dans une telle situation, la quantité de matériau visqueux déposé sur la première surface devient insuffisante pour assurer un recouvrement homogène sur la surface de l'ensemble panneau support, canal d'airbag et volet d'obturation, de sorte que localement des variations de l'épaisseur du matériau sur l'ensemble sont susceptibles d'apparaître. De façon similaire, un écoulement du matériau visqueux au niveau de la seconde face est susceptible de conduire à un déplacement d'une partie du canal d'airbag par rapport au panneau support si le matériau visqueux se solidifie et présente des propriétés expansives. Un tel déplacement est alors susceptible de faire apparaitre un défaut dans la continuité de surface au niveau de l'ensemble panneau support, canal d'airbag et volet d'obturation.

Pour écarter ce problème d'écoulement du matériau entre les deux faces de l'ensemble que réalise la réunion du panneau support avec le canal d'airbag associé au volet d'obturation, certains arrangements ont été développés de sorte que le canal d'airbag et l'orifice du panneau support sont réalisés sous la forme de deux conduits de dimensions complémentaires pour permettre le positionnement du premier dans le second. De plus, la face extérieure du conduit du canal d'airbag comprend sur sa périphérie une ou plusieurs lèvres dont les extrémités sont configurées pour appuyer contre la face intérieure du conduit de l'orifice du panneau support. Ces lèvres opèrent ainsi une séparation structurelle entre les deux espaces positionnés de part et d'autre de l'ensemble réalisé par le panneau support avec le canal d'airbag et le volet d'obturation et permettent ainsi une isolation du matériau coulé ou injecté au niveau d'une seule des faces de l'ensemble sans que la seconde face soit souillée. Cependant, lorsque la pression exercée par le matériau coulé ou injecté est trop importante, les lèvres qui retiennent sont susceptibles de ne pas être en mesure de retenir correctement le matériau. Le document DE 10 2015 208823 divulgue un système d'assemblage d'un canal d'airbag dans un orifice de panneau support d'habillage intérieur de véhicule selon le préambule de la revendication 1.

La présente invention a pour but de pallier cet inconvénient en proposant une solution qui tout en autorisant un montage facilité du canal d'airbag sur le panneau support, permet d'opérer une jonction étanche entre ces deux éléments de façon à assurer une retenu de matière coulé ou injectée au niveau d'une seule des faces de l'ensemble formé par le panneau support avec le canal d'airbag, sans risque de fuite lorsque la pression exercée par la matière devient trop importante.

L'invention concerne un système d'assemblage d'un canal d'airbag dans un orifice de panneau support d'habillage intérieur de véhicule comme définit dans la revendication 1.

L'invention porte également sur un ensemble comprenant au moins un système d'assemblage selon l'invention, dans lequel le canal d'airbag est associé à un volet d'obturation de l'orifice extérieur, caractérisé en ce que l'ensemble comprend au moins également une couche de matière de type mousse ou résine positionnée sur la surface du panneau support d'habillage intérieur de véhicule, sur le rebord périphérique du canal d'airbag et sur au moins un volet d'obturation de son orifice extérieur.

L'invention concerne encore un procédé de mise en oeuvre d'un système d'assemblage selon l'invention en vue de la réalisation d'un ensemble selon l'invention, caractérisé en ce que le procédé comprend :
- une étape d'insertion d'au moins une portion du conduit d'un canal d'airbag au travers de l'orifice du panneau support d'habillage intérieur du véhicule,
- une étape de positionnement, d'une part, du rebord périphérique en pourtour de l'ouverture extérieure du canal d'airbag et, d'autre part, d'au moins un élément en saillie de la face extérieure du conduit, le rebord périphérique et l'élément en saillie étant de part et d'autre du panneau support d'habillage intérieur du véhicule,
- une étape de pincement du bord de l'orifice (4) du panneau (3) support d'habillage par le rebord périphérique en pourtour de l'ouverture extérieure du canal d'airbag et le au moins un élément en saillie de la face extérieure du conduit,
- une étape de coulage ou d'injection d'une matière sur la surface du panneau support d'habillage intérieur de véhicule, sur le rebord périphérique du canal d'airbag et/ou sur le au moins un volet d'obturation de son orifice extérieur.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :

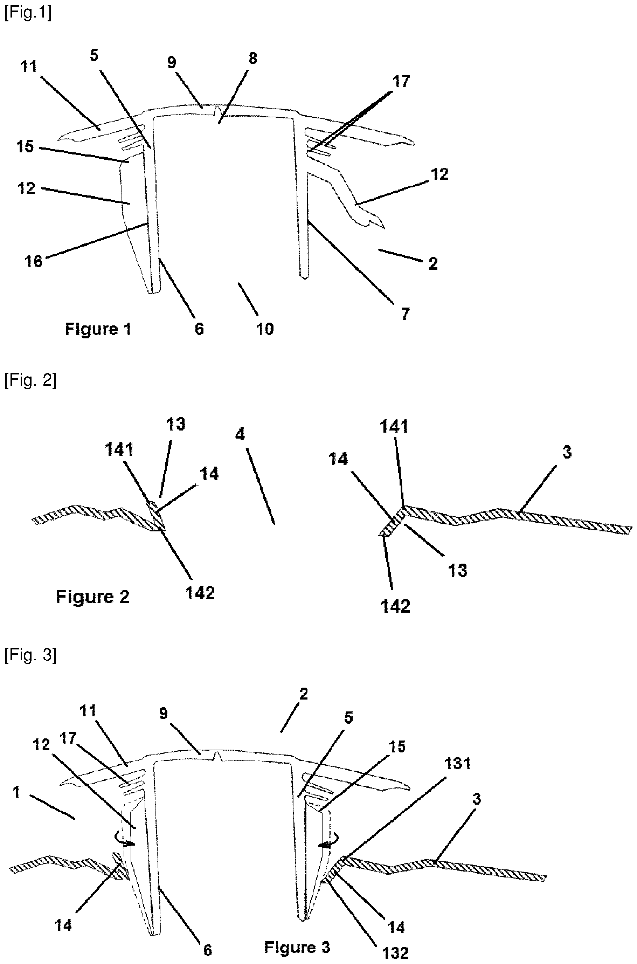

[Fig.1] est une représentation schématique d'un exemple de réalisation d'un canal d'airbag selon l'invention,
[Fig.2] est une représentation schématique d'un exemple de réalisation d'un panneau support d'habillage intérieur de véhicule selon l'invention,
[Fig.3] est une représentation schématique d'un premier exemple selon l'invention de l'assemblage d'un canal d'airbag dans l'orifice d'un panneau support d'habillage intérieur de véhicule,

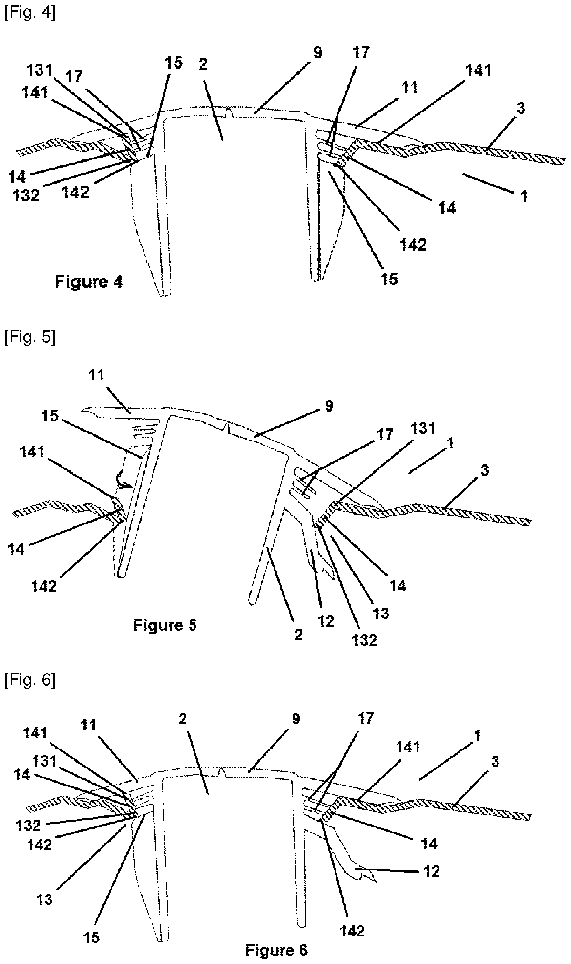

[Fig.4] est une représentation schématique d'un ensemble selon l'invention obtenu selon le premier exemple d'assemblage,
[Fig.5] est une représentation schématique d'un second exemple selon l'invention de l'assemblage d'un canal d'airbag dans l'orifice d'un panneau support d'habillage intérieur de véhicule,
[Fig.6] est une représentation schématique d'un ensemble selon l'invention obtenu selon le second exemple d'assemblage,

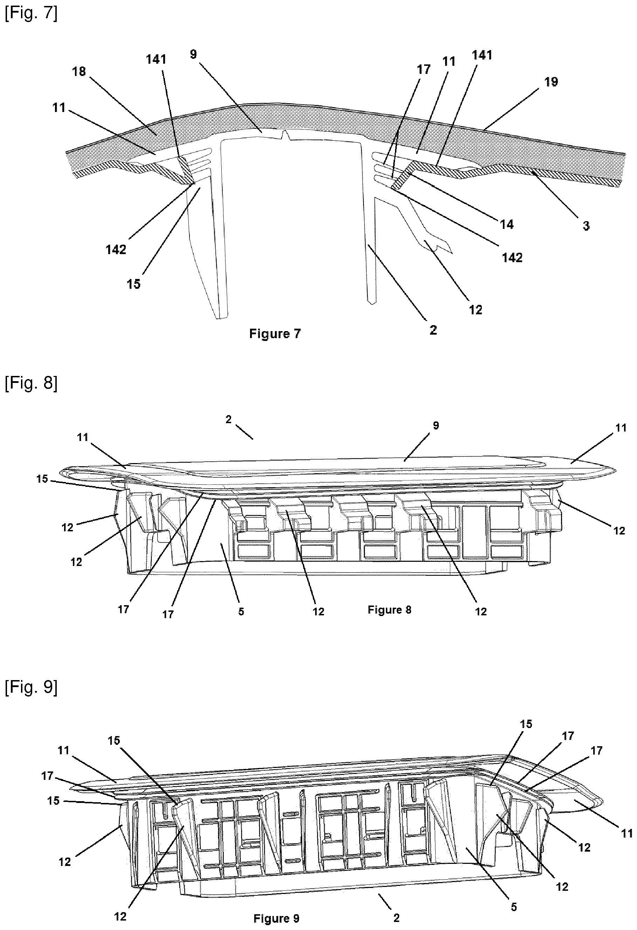

[Fig.7] est une représentation schématique d'un ensemble selon l'invention obtenu selon le premier exemple d'assemblage et comprenant également une matière injectable ou déposable par coulage recouverte d'un élément de décor dont la surface forme l'habillage extérieur de l'habitacle.
[Fig.8] est une représentation schématique tridimensionnelle d'un canal d'airbag selon le second exemple de l'ensemble assemblé selon l'invention.
[Fig.9] est une représentation schématique tridimensionnelle d'un canal d'airbag selon le premier exemple de l'ensemble assemblé selon l'invention

L'invention se rapporte à un système d'assemblage 1 d'un canal d'airbag 2 dans un orifice 4 de panneau 3 support d'habillage intérieur de véhicule, le canal d'airbag 2 présentant la forme d'un conduit 5 axial qui comprend, d'une part, une face intérieure 6 et une face extérieure 7 et, d'autre part, un orifice extérieur 8 situé à une première extrémité du conduit 5 et destiné à être associé à au moins un volet 9 pour être positionné vers l'intérieur du véhicule et un orifice intérieur 10 situé à une seconde extrémité du conduit 5 et destiné à être positionné au niveau du module d'airbag dans lequel est placé le coussin d'airbag replié avant son déploiement, le panneau 3 support d'habillage intérieur du véhicule présentant une surface de support et un orifice 4 arrangé pour le positionnement d'un canal d'airbag 2, caractérisé en ce que le système d'assemblage 1 comprend au moins :
- au niveau du canal d'airbag 2 :
   - un rebord périphérique 11 positionné sur le pourtour de l'orifice extérieur 8 du canal d'airbag et disposé de façon à recouvrir une portion de la surface du panneau 3 d'habillage intérieur située au niveau du bord de l'orifice 4 du panneau 3 support,
   - au moins un élément en saillie 12 positionné sur la face extérieure 7 du conduit 5,
- au niveau du bord de l'orifice 4 du panneau 3 support d'habillage intérieur du véhicule, au moins une portion 14 du bord 13 de l'orifice 4 structurellement configurée pour être positionnée, d'une part, en vis-à-vis de la face extérieure 7 du conduit 5 du canal d'airbag 2 et, d'autre part, entre le rebord périphérique 11 et l'élément en saillie 12 de la face extérieure 7 du conduit 5 du canal d'airbag 2.

Le système d'assemblage 1 selon l'invention est ainsi agencé pour permettre une jonction avec le canal d'airbag 2 par recouvrement du bord 13 de l'orifice 4 du panneau 3 support, de sorte que le système d'assemblage 1 recouvre au moins une des faces du panneau 3 support au niveau du bord 13 de l'orifice 4 du panneau 3. Ce recouvrement du bord 13 de l'orifice 4 du panneau 3 permet ainsi de réaliser une zone de jonction entre le panneau 3 et le canal d'airbag 2, cette au moins une zone de jonction est adaptée pour isoler les espaces disposés de part et d'autre de l'ensemble que forme le panneau 3 et le canal d'airbag 2.

Selon un exemple particulier de construction du système d'assemblage 1 de l'invention, au niveau du bord de l'orifice 4 du panneau 3 support d'habillage intérieur du véhicule, au moins une portion 14 du bord 13 de l'orifice 4 forme une structure qui, dans un plan en section comprenant l'axe du conduit 5 du canal d'airbag 2, est réalisée par une disposition formant un angle avec le plan du panneau 3 support d'habillage. La portion 14 disposée selon un tel angle présente une longueur qui est au moins supérieure à l'épaisseur du panneau 3 support d'habillage. De plus, cette portion 14 du bord 13 de l'orifice 4 est structurellement configurée pour que l'une des faces de cette portion 14 soit positionnée, d'une part, en vis-à-vis de la face extérieure 7 du conduit 5 du canal d'airbag 2 et, d'autre part, entre le rebord périphérique 11 et l'élément en saillie 12 de la face extérieure 7 du conduit 5 du canal d'airbag 2.

Selon l'invention, au moins une portion 14 du bord 13 de l'orifice 4 est structurellement configurée de façon à comprendre au moins, d'une part, un premier point d'appui 141 contre une face du rebord périphérique 11 du canal d'airbag 2 et, d'autre part, un second point d'appui 142 contre l'élément en saillie 12 positionné sur la face extérieure 7 du conduit 5 du canal d'airbag 2. Selon une construction préférentielle, chacun de ces points d'appui 141, 142 est respectivement réalisé pour être positionné sur l'ensemble du pourtour du conduit 5 du canal d'airbag 2. Par ce double contact structurel et continu du bord 13 de l'orifice 4 du panneau 3 support avec le canal d'airbag 2, la séparation des deux espaces de part et d'autre de l'ensemble que forme le panneau 3 et le canal d'airbag 2 se trouve ainsi optimisée. Selon une construction préférentielle de cet exemple particulier, la face extérieure 7 du conduit 5 du canal d'airbag 2 comprend plusieurs éléments en saillie 12 positionnés sur la périphérie du conduit 5 selon des espacements stratégiquement adaptés pour opérer plusieurs points d'appui avec le bord 13 du panneau 3 support agencés sur le pourtour du conduit 5, de façon à assurer une optimisation du maintien du canal d'airbag 2. Il convient de relever que, selon leur réalisation, un ou plusieurs de ces éléments en saillie 12 est susceptible d'être disposé le long d'une portion angulaire de la face extérieure 7 du conduit 5 du canal d'airbag 2. Les points d'appui 142 des éléments en saillie 12 régulièrement disposés contre le bord 13 de l'orifice 4 du panneau 3 permettent d'opérer un pincement optimisé du bord 13 de l'orifice 4 du panneau 3 sur l'ensemble du pourtour du canal d'airbag 2 de sorte que le rebord périphérique 11 est maintenu positionné selon un appui continu et sensiblement homogène le long d'une portion du panneau 3 support qui entoure le bord 13 de son orifice 4.

Selon une autre construction préférentielle complémentaire, la portion 14 du bord 13 de l'orifice 4 est configurée pour exercer une pression simultanée au niveau de chacun des points d'appui 141, 142 avec le canal d'airbag 12. Selon un exemple de réalisation, cette portion 14 est réalisée sous la forme d'une structure présentant une hauteur ou une longueur équivalente ou légèrement supérieure à l'écartement existant entre, d'une part, la face du rebord périphérique 11 du canal d'airbag 2 et, d'autre part, l'élément en saillie 12. Cet exemple particulier d'arrangement, couplé avec une déformabilité d'une des pièces que sont le bord 13 de l'orifice 4 du panneau 3 support et le canal d'airbag 2, autorise un positionnement du bord 13 de l'orifice 4 en compression entre les deux points d'appui 141, 142 au niveau de surfaces particulières du canal d'airbag 2. Un tel arrangement faisant intervenir une pression entre deux pièces du système 1 participe, d'une part, à l'assemblage du panneau 3 avec le canal d'airbag 2 et, d'autre part, à l'étanchéification de la jonction entre ces deux pièces lorsque celle-ci entoure de façon continue le conduit 5 du canal d'airbag 2 pour optimiser la résistance de la jonction aux pressions du liquide visqueux par rapport aux systèmes de l'art antérieur.

Il convient également de relever que, dans le présent document, le terme de « point d'appui » se rapporte à une zone de contact entre les deux pièces en appui l'une contre l'autre. Cette zone de contact définit une surface qui, en plus d'être continue en entourant le conduit 5 du canal d'airbag 2, est susceptible de correspondre à des dimensions spécifiques aux particularités de forme, de section, d'épaisseur et de dimensions du canal d'airbag 2 et du bord 13 de l'orifice 4 du panneau 3. Aussi, selon une variante de réalisation de l'invention, le « point d'appui » est susceptible de correspondre à une surface élargie par rapport à une zone ponctuelle et réduite.

Selon un autre exemple particulier de construction du système d'assemblage 1 de l'invention, complémentaire des exemples précédemment détaillés, dans un plan en section perpendiculaire au plan du panneau 3 support d'habillage intérieur de véhicule, au moins une portion du bord 13 de l'orifice 4 du panneau 3 support comprend, d'une part, une jonction 131 avec le panneau 3 support au niveau du rebord périphérique 11 du canal d'airbag 2 et, d'autre part, un bord libre 132 au niveau d'un élément en saillie 12 positionné sur la face extérieure 7 du conduit 5 du canal d'airbag 2. Selon cet exemple de construction, la portion du bord 13 de l'orifice 4 du panneau 3 support présente un arrangement susceptible d'être réalisé facilement pour assurer un positionnement en contrainte du bord 13 de l'orifice 4 entre les deux parties dédiées du canal d'airbag 2. Par ailleurs, il convient de relever que cet arrangement permet également la réalisation du bord 13 de l'orifice 4 du panneau 3 sous la forme d'une portion dont la quantité de matière nécessaire est suffisante pour réaliser deux points d'appui contre des surfaces dédiées du canal d'airbag 2 tout en limitant la quantité de matière nécessaire par rapport à un bord 13 du panneau 3 support dont l'épaisseur serait sensiblement identique à l'écartement entre, d'une part, le rebord périphérique 11 du canal d'airbag 2 et, d'autre part, l'élément en saillie 12 positionné sur la face extérieure 7 du conduit 5 du canal d'airbag 2. Selon une variante correspondant à une spécificité de cet exemple particulier, la jonction 131 entre, d'une part, le panneau 3 support et, d'autre part, le bord libre 132 de la portion du bord 13 de l'orifice 4 réalise une liaison structurelle susceptible de présenter une flexibilité permettant d'assurer un positionnement en pression des points d'appui 141, 142 du bord 13 du panneau 3 support contre les différentes parties du canal d'airbag 2.

Selon un autre exemple particulier de construction du système d'assemblage 1 de l'invention, alternatif à l'exemple précédemment détaillé, dans un plan en section perpendiculaire au plan du panneau 3 support d'habillage intérieur de véhicule, au moins une portion du bord 13 de l'orifice 4 du panneau 3 support comprend, d'une part, une jonction 131 avec le panneau 3 support positionnée au niveau d'un élément en saillie 12 positionné sur la face extérieure 7 du conduit 5 du canal d'airbag 2 et, d'autre part, un bord libre 132 au niveau du rebord périphérique 11 du canal d'airbag 2. Cette alternative de construction présente des avantages de réalisation identiques à ceux de l'exemple particulier de construction précédemment décrit. De même, selon une variante correspondant à une spécificité de cet exemple particulier, la jonction 131 est susceptible de présenter une flexibilité permettant d'assurer un positionnement en pression des points d'appui 141, 142 du bord 13 du panneau 3 support contre les différentes parties du canal d'airbag 2.

Aussi, selon les deux exemples particuliers de construction précédemment détaillés, la portion du bord 13 de l'orifice 4 du panneau 3 support réalise, dans un plan section, un angle rapport avec le reste du panneau 3 support. La portion du bord 13 qui forme ce changement de direction présente une longueur au moins supérieure à l'épaisseur du panneau 3 support. Cette portion du bord 13 du panneau 3 support est ainsi structurellement configurée pour que, selon l'exemple particulier de construction mis en oeuvre, l'une de ses faces se trouve positionnée, d'une part, en vis-à-vis de la face extérieure 7 du conduit 5 du canal d'airbag 2 et, d'autre part, entre le rebord périphérique 11 et l'élément en saillie 12 de la face extérieure 7 du conduit 5 du canal d'airbag 2.

Selon un autre exemple particulier de construction du système d'assemblage 1 de l'invention, le bord 13 de l'orifice 4 du panneau 3 support d'habillage intérieur présente une flexibilité par déplacement selon un axe sensiblement parallèle à l'axe du conduit 5 du canal d'airbag 2, c'est-à-dire par pivotement de cette partie autour d'un axe perpendiculaire à l'axe du conduit 5 du canal d'airbag. Cette flexibilité autorise une déformation localisée du bord 13 du panneau 3 support de sorte que l'insertion du conduit 5 du canal d'airbag 2 au niveau de l'orifice 4 du panneau 3 et plus particulièrement l'insertion de l'élément en saillie 12, s'en trouve facilité.

De façon alternative ou complémentaire, le canal d'airbag 2 présente une flexibilité de l'une de ses parties par déplacement selon un axe sensiblement parallèle à l'axe du conduit 5 du canal d'airbag 2, c'est-à-dire par pivotement de cette partie autour d'un axe perpendiculaire à l'axe du conduit 5 du canal d'airbag 2. Selon une construction préférentielle, la flexibilité est localisée au niveau de la jonction entre, d'une part, l'élément en saillie 12 et, d'autre part, la face extérieure 7 du conduit 5 du canal d'airbag 2. Cette particularité de construction autorise ainsi la déformation localisée d'une ou de plusieurs parties du canal d'airbag 2 pour faciliter l'assemblage du canal d'airbag 2 au panneau 3 support. De façon complémentaire, cette flexibilité élastique du canal d'airbag 2 permet également d'optimiser le contact entre le canal d'airbag 2 et le bord 13 de l'orifice 4 du panneau 3 support au niveau des points d'appui 141, 142 lorsque le bord du panneau 3 support est inséré entre le rebord périphérique 11 et l'élément en saillie 12 du canal d'airbag 2.

Selon un autre exemple particulier de construction du système d'assemblage 1 de l'invention susceptible d'être combiné avec les exemples particuliers précédemment détaillés, l'élément en saillie 12 du canal d'airbag 2 est réalisé sous la forme d'une structure en relief disposée sur au moins une portion de la face extérieure 7 du conduit 5 du canal d'airbag 2, au moins une portion de la structure en relief étant disposée dans un plan sensiblement parallèle au plan du rebord périphérique 11 du canal d'airbag 2. Selon cette particularité de construction, l'élément en saillie 12 présente la forme d'au moins une section de collerette positionnée sur une portion de la périphérie de la face extérieure 7 du conduit 5 du canal d'airbag 2. Cette section de collerette est ainsi au moins en partie positionnée dans un plan sensiblement parallèle au plan du rebord périphérique 11. Aussi, selon cet exemple de construction, une face de l'élément en saillie et une face du rebord périphérique présentent des portions disposées de façon sensiblement parallèles et entre lesquelles une portion du bord 13 de l'orifice 4 du panneau 3 support se place en pression.

Selon un autre exemple particulier de construction du système d'assemblage 1 de l'invention, alternatif à l'exemple précédemment détaillé, l'élément en saillie 12 sur la face extérieure 7 du conduit 5 du canal d'airbag 2 est construite de façon à comprendre une interface de blocage 15 configurée pour interagir avec une face du bord 13 de l'orifice 4 du panneau 3 support, cette interface de blocage 15 étant associée à une structure de jonction 16 avec la face extérieure 7 du conduit 5 du canal d'airbag 2, cette structure de jonction 16 autorisant un pivotement de l'interface de blocage 15 autour d'un axe sensiblement parallèle à l'axe du conduit 5 du canal d'airbag 2 positionné au travers de l'orifice 4 du panneau 3 support. Cette interface de blocage 15 est ainsi configurée pour être rapprochée contre la face extérieure 7 du conduit 5 du canal d'airbag 2 par pivotement au niveau de la structure de jonction 16 lors de l'insertion du conduit 5 du canal d'airbag 2 dans l'orifice 4 du panneau 3 support, puis pour être écartée de la face extérieure 7 du conduit 5 du canal d'airbag 2 lorsque le canal d'airbag 2 est en position dans l'orifice 4 du panneau 3 support. Une portion de l'interface de blocage 15 qui réalise l'élément en saillie 12 est alors configurée pour porter un point d'appui destiné à appuyer contre le bord 13 de l'orifice 4 du panneau 3 support, de sorte que le bord 13 de l'orifice 4 du panneau 3 se trouve pincé entre, d'une part, une face du rebord périphérique 11 et, d'autre part, une portion de l'interface de blocage 15. D'une façon analogue, l'élément en saillie 12 est construit de façon à réaliser un dispositif de clipsage qui présente une flexibilité autour d'un axe perpendiculaire à l'axe du conduit 5 du canal d'airbag 2 et comporte une interface de blocage arrangée pour interagir avec une face du bord 13 de l'orifice 4 du panneau 3 support.

Selon un autre exemple particulier de construction du système d'assemblage 1 de l'invention susceptible d'être combiné avec les exemples particuliers précédemment détaillés, le canal d'airbag 2 comprend, entre le rebord périphérique 11 et l'élément en saillie 12, au moins une lèvre 17 disposée le long d'au moins une portion de la face extérieure 7 du conduit 5 du canal d'airbag 2 et selon un plan sensiblement parallèle au plan du rebord périphérique 11 et perpendiculaire à l'axe principal du conduit 5 du canal d'airbag 2, la lèvre 17 comportant une longueur suffisante depuis la face extérieure 7 du conduit 5 du canal d'airbag 2 pour que son extrémité périphérique interagisse avec une portion du bord 13 de l'orifice 4 du panneau 3 support. Cette lèvre 17 réalise ainsi une jonction entre la face extérieure du conduit 5 du canal d'airbag 2 et une surface du bord 13 de l'orifice 4 du panneau 3 support qui fait face à l'orifice 4. La lèvre 17 réalise ainsi une jonction supplémentaire et complémentaire aux autres points d'appui 141, 142 qui réalisent des jonctions structurelles entre le canal d'airbag 6 et le panneau 3 support. Cette jonction supplémentaire permet ainsi d'opérer un blocage supplémentaire de l'écoulement d'un matériau déposé sous forme visqueuse au niveau d'une face du panneau 3 support et ainsi empêcher sa présence au niveau de la seconde face.

Selon un autre exemple particulier de construction du système d'assemblage 1 de l'invention susceptible d'être combiné avec les exemples particuliers précédemment détaillés, à proximité du bord 13 de l'orifice 4, la surface du panneau 3 support d'habillage intérieur du véhicule présente une variation de sa planéité sous la forme d'une concavité dont la pente et/ou la profondeur et/ou la dimension sont sensiblement complémentaires de la forme et/ou de l'épaisseur et/ou de la dimension du rebord périphérique 11 positionné sur le pourtour de l'orifice extérieur 8 du conduit 5 du canal d'airbag 2. Cet arrangement particulier positionne ainsi la concavité du panneau 3 support sur la périphérie du bord 13 de l'orifice 4, au niveau de la face du panneau 3 support orientée vers l'intérieur du véhicule. Les dimensions de cette concavité sont définies pour être complémentaires du volume occupé par le rebord périphérique 11 et destiné à reposer sur la surface du panneau 3 support, de sorte que la surface de l'ensemble formé par le panneau 3 support et le rebord périphérique 11 du canal d'airbag 2 qui se trouve orientée vers l'intérieur du véhicule présente une continuité de niveau de surface. Ainsi, la différence de niveau entre, d'une part, la surface du panneau 3 support qui n'est pas appuyée contre le rebord périphérique 11 du canal d'airbag 2 et, d'autre part, la surface du rebord périphérique 11 du canal d'airbag 2 se trouve réduite. Cette continuité de niveau de surface se trouve ainsi plus aisément complétée une fois que le matériau visqueux est déposé sur la face partagée par le panneau 3 support avec le rebord périphérique 11 du canal d'airbag 6 et orientée vers l'intérieur du véhicule.

L'invention porte également sur un ensemble comprenant au moins un système d'assemblage 1 d'un canal d'airbag 2 dans un orifice 4 de panneau 3 support selon l'invention, dans lequel le canal d'airbag 2 est associé à au moins un volet d'obturation 9 de l'orifice extérieur 8, caractérisé en ce que l'ensemble comprend au moins également une couche de matière 18 injectable ou déposable par coulage de type mousse ou résine positionnée sur la surface du panneau 3 support d'habillage intérieur de véhicule, sur le rebord périphérique 11 du canal d'airbag 2 et sur les volets 9 qui participent à l'obturation de son orifice extérieur 8. La matière 18 injectable ou déposable par coulage est de tout type connu utilisé dans le cadre de la réalisation des surfaces intérieures d'habitacle de véhicule. Il s'agit généralement d'une composition visqueuse qui sont susceptibles de présenter des propriétés expansives et de solidification une fois celle-ci injectée ou déposée par coulage au niveau de l'ensemble de l'invention.

Selon un exemple particulier de construction de l'ensemble de l'invention, celui-ci comprend également un élément 19 de décor disposé sur la couche de matière 18 injectable ou déposable par coulage et dont la surface forme l'habillage extérieur de l'habitacle.

L'invention concerne aussi un procédé de mise en oeuvre d'un système d'assemblage 1 d'un canal d'airbag 2 à un orifice 4 de panneau 3 support selon l'invention en vue de la réalisation d'un ensemble selon l'invention, caractérisé en ce que le procédé comprend :
- une étape d'insertion d'au moins une portion du conduit 5 d'un canal d'airbag 2 au travers de l'orifice 4 du panneau 3 support d'habillage intérieur du véhicule,
- une étape de positionnement, d'une part, du rebord périphérique 11 en pourtour de l'orifice extérieur 8 du canal d'airbag 2 et, d'autre part, d'au moins un élément en saillie 12 de la face extérieure 7 du conduit 5, le rebord périphérique 11 et l'élément en saillie 12 étant de part et d'autre du panneau 3 support d'habillage intérieur du véhicule,
- une étape de pincement du bord de l'orifice 4 du panneau 3 support d'habillage par le rebord périphérique 11 en pourtour de l'orifice extérieur 8 du canal d'airbag 2 et le au moins un élément en saillie 12 de la face extérieure 7 du conduit 5,
- une étape de coulage ou d'injection d'une matière 18 sur la surface du panneau 3 support d'habillage intérieur de véhicule, sur le rebord périphérique 11 du canal d'airbag 2 et/ou sur le au moins un volet 9 d'obturation de son orifice extérieur 8.

Selon une particularité du procédé de mise en oeuvre de l'invention, ce procédé comprend également une étape de blocage de la matière 18 injectée ou déposée par coulage au niveau de la seule face de l'ensemble formé par le panneau 3 support, le rebord périphérique 11 et le volet 9 d'obturation sur laquelle la matière 18 injectée est déposée. Ce blocage est réalisé par au moins une des différentes jonctions du système d'assemblage de l'invention entre le panneau 3 support et le canal d'airbag 2.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Système d'assemblage (1) d'un canal d'airbag (2) dans un orifice (4) de panneau (3) support d'habillage intérieur de véhicule, le canal d'airbag (2) présentant la forme d'un conduit (5) axial qui comprend, d'une part, une face intérieure (6) et une face extérieure (7) et, d'autre part, un orifice extérieur (8) situé à une première extrémité du conduit (5) et destiné à être associé à au moins un volet (9) pour être positionné vers l'intérieur du véhicule et un orifice intérieur (10) situé à une seconde extrémité du conduit (5) et destiné à être positionné au niveau du module d'airbag dans lequel est placé le coussin d'airbag replié avant son déploiement, le panneau (3) support d'habillage intérieur du véhicule présentant une surface de support et un orifice (4) arrangé pour le positionnement d'un canal d'airbag (2), où le système d'assemblage (1) comprend au moins :
- au niveau du canal d'airbag (2) :
• un rebord périphérique (11) positionné sur le pourtour de l'orifice extérieur (8) du canal d'airbag et disposé de façon à recouvrir une portion de la surface du panneau (3) d'habillage intérieur située au niveau du bord de l'orifice (4) du panneau (3) support,
• au moins un élément en saillie (12) positionné sur la face extérieure (7) du conduit (5), **caractérisé en ce que**
- au niveau du bord de l'orifice (4) du panneau (3) support d'habillage intérieur du véhicule, au moins une portion (14) du bord (13) de l'orifice (4) structurellement configurée pour être positionnée, d'une part, en vis-à-vis de la face extérieure (7) du conduit (5) du canal d'airbag (2) et, d'autre part, entre le rebord périphérique (11) et l'élément en saillie (12) de la face extérieure (7) du conduit (5) du canal d'airbag (2), au moins une portion (14) du bord (13) de l'orifice (4) est structurellement configurée de façon à comprendre au moins, d'une part, un premier point d'appui (141) contre une face du rebord périphérique (11) du canal d'airbag (2) et, d'autre part, un second point d'appui (142) contre l'élément en saillie (12) positionné sur la face extérieure (7) du conduit (5) du canal d'airbag (2).

2. Système d'assemblage (1) d'un canal d'airbag (2) dans un orifice (4) de panneau (3) support selon la revendication 1, **caractérisé en ce que**, dans un plan en section perpendiculaire au plan du panneau (3) support d'habillage intérieur de véhicule, au moins une portion du bord (13) de l'orifice (4) du panneau (3) support comprend, d'une part, une jonction (131) avec le panneau (3) support positionnée au niveau du rebord périphérique (11) du canal d'airbag (2) et, d'autre part, un bord libre (132) au niveau d'un élément en saillie (12) positionné sur la face extérieure (7) du conduit (5) du canal d'airbag (2).

3. Système d'assemblage (1) d'un canal d'airbag (2) dans un orifice (4) de panneau (3) support selon la revendication 1, **caractérisé en ce que**, dans un plan en section perpendiculaire au plan du panneau (3) support d'habillage intérieur de véhicule, au moins une portion du bord (13) de l'orifice (4) du panneau (3) support comprend, d'une part, une jonction (131) avec le panneau (3) support positionnée au niveau d'un élément en saillie (12) positionné sur la face extérieure (7) du conduit (5) du canal d'airbag (2) et, d'autre part, un bord libre (132) au niveau du rebord périphérique (11) du canal d'airbag (2).

4. Système d'assemblage (1) d'un canal d'airbag (2) dans un orifice (4) de panneau (3) support selon une des revendications précédentes, **caractérisé en ce que** le canal d'airbag (2) présente une flexibilité de l'une de ses parties par déplacement selon un axe sensiblement parallèle à l'axe du conduit (5) du canal d'airbag (2).

5. Système d'assemblage (1) d'un canal d'airbag (2) dans un orifice (4) de panneau (3) support selon une des revendications précédentes, **caractérisé en ce que** le bord (13) de l'orifice (4) du panneau (3) support d'habillage intérieur présente une flexibilité par déplacement selon un axe sensiblement parallèle à l'axe du conduit (5) du canal d'airbag (2).

6. Système d'assemblage (1) d'un canal d'airbag (2) dans un orifice (4) de panneau (3) support selon une des revendications 1 à 5, **caractérisé en ce que** l'élément en saillie (12) du canal d'airbag 2 est réalisé sous la forme d'une structure en relief disposée sur au moins une portion de la face extérieure (7) du conduit (5) du canal d'airbag (2), au moins une portion de la structure en relief étant disposée dans un plan sensiblement parallèle au plan du rebord périphérique (11) du canal d'airbag (2).

7. Système d'assemblage (1) d'un canal d'airbag (2) dans un orifice (4) de panneau (3) support selon une des revendications 1 à 5, **caractérisé en ce que** l'élément en saillie (12) sur la face extérieure (7) du conduit (5) du canal d'airbag (2) est réalisé sous la forme d'une interface de blocage (15) configurée pour interagir avec une face du bord (13) de l'orifice (4) du panneau (3) support, cette interface de blocage (15) étant associée à une structure de jonction (16) avec la face extérieure (7) du conduit (5) du canal d'airbag (2), cette structure de jonction (16) autorisant un pivotement de l'interface de blocage (15) autour d'un axe sensiblement parallèle à l'axe du conduit (5) du canal d'airbag (2) positionné au travers de l'orifice (4) du panneau (3) support.

8. Système d'assemblage (1) d'un canal d'airbag (2) dans un orifice (4) de panneau (3) support selon une des revendications précédentes, **caractérisé en ce que** le canal d'airbag (2) comprend, entre le rebord périphérique (11) et l'élément en saillie (12), au moins une lèvre (17) disposée le long d'au moins une portion de la face extérieure (7) du conduit (5) du canal d'airbag (2) et selon un plan sensiblement parallèle au plan du rebord périphérique (11) et perpendiculaire à l'axe principal du conduit (5) du canal d'airbag (2), la lèvre (17) comportant une longueur suffisante depuis la face extérieure (7) du conduit (5) du canal d'airbag (2) pour que son extrémité périphérique interagisse avec une portion du bord (13) de l'orifice (4) du panneau (3) support.

9. Système d'assemblage (1) d'un canal d'airbag (2) dans un orifice (4) de panneau (3) support selon une des revendications précédentes, **caractérisé en ce que**, à proximité du bord de l'orifice (4), la surface du panneau (3) support d'habillage intérieur du véhicule présente une variation de sa planéité sous la forme d'une concavité dont la pente et/ou la profondeur et/ou la dimension sont sensiblement complémentaires de la forme et/ou de l'épaisseur et/ou de la dimension du rebord périphérique (11) positionné sur le pourtour de l'orifice extérieur (8) du conduit (5) du canal d'airbag (2).

10. Ensemble comprenant au moins un système d'assemblage (1) d'un canal d'airbag (2) dans un orifice (4) de panneau (3) support selon une des revendications 1 à 9, dans lequel le canal d'airbag (2) est associé à un volet d'obturation (9) de l'orifice extérieur (8), **caractérisé en ce que** l'ensemble comprend au moins également une couche de matière (18) injectable ou déposable par coulage de type mousse ou résine positionnée sur la surface du panneau (3) support d'habillage intérieur de véhicule, sur le rebord périphérique (11) du canal d'airbag (2) et sur au moins un volet d'obturation (9) de son orifice extérieur (8).

11. Procédé de mise en oeuvre d'un système d'assemblage (1) d'un canal d'airbag (2) dans un orifice (4) de panneau (3) support selon une des revendications 1 à 9 en vue de la réalisation d'un ensemble selon la revendication 10, **caractérisé en ce que** le procédé comprend :
- une étape d'insertion d'au moins une portion du conduit (5) d'un canal d'airbag (2) au travers de l'orifice (4) du panneau (3) support d'habillage intérieur du véhicule,
- une étape de positionnement, d'une part, du rebord périphérique (11) en pourtour de l'orifice extérieur (8) du canal d'airbag (2) et, d'autre part, d'au moins un élément en saillie (12) de la face extérieure (7) du conduit (5), le rebord périphérique (11) et l'élément en saillie (12) étant de part et d'autre du panneau (3) support d'habillage intérieur du véhicule,
- une étape de pincement du bord de l'orifice (4) du panneau (3) support d'habillage par le rebord périphérique (11) en pourtour de l'orifice extérieur (8) du canal d'airbag (2) et le au moins un élément en saillie (12) de la face extérieure (7) du conduit (5),
- une étape de coulage ou d'injection d'une matière (18) sur la surface du panneau (3) support d'habillage intérieur de véhicule, sur le rebord périphérique (11) du canal d'airbag (2) et/ou sur le au moins un volet (9) d'obturation de son orifice extérieur (8).

## Patentansprüche

1. System (1) zur Montage eines Airbagkanals (2) in einer Öffnung (4) einer Innenverkleidungsstützplatte (3) eines Fahrzeugs, wobei der Airbagkanal (2) die Form einer axialen Leitung (5) aufweist, die Folgendes umfasst:
einerseits eine Innenfläche (6) und eine Außenfläche (7) und andererseits eine Außenöffnung (8), die sich an einem ersten Ende der Leitung (5) befindet und dazu vorgesehen ist, mit mindestens einer Klappe (9) verbunden zu sein, um zum Inneren des Fahrzeugs hin positioniert zu sein, und eine Innenöffnung (10), die sich an einem zweiten Ende der Leitung (5) befindet und dazu bestimmt ist, im Bereich des Airbagmoduls positioniert zu sein, in dem der zusammengefaltete Airbag vor seiner Entfaltung angeordnet ist, wobei die Innenverkleidungsstützplatte (3) des Fahrzeugs eine Stützfläche und eine für die Positionierung eines Airbagkanals (2) angeordnete Öffnung (4) aufweist,
wobei das Montagesystem (1) mindestens Folgendes umfasst:
- im Bereich des Airbagkanals (2):
• einen Umfangsrand (11), der am Umfang der Außenöffnung (8) des Airbagkanals positioniert und so angeordnet ist, dass er einen Abschnitt der Oberfläche der Platte (3) der Innenverkleidung, der sich im Bereich der Kante der Öffnung (4) der Stützplatte (3) befindet, abdeckt,
• mindestens ein vorstehendes Element (12), das an der Außenfläche (7) der Leitung (5) positioniert ist, **dadurch gekennzeichnet, dass**
- im Bereich der Kante der Öffnung (4) der Innenverkleidungsstützplatte (3) des Fahrzeugs mindestens ein Abschnitt (14) der Kante (13) der Öffnung (4) strukturell dazu ausgelegt ist, einerseits gegenüber der Außenfläche (7) der Leitung (5) des Airbagkanals (2) und andererseits zwischen dem Umfangsrand (11) und dem vorstehenden Element (12) der Außenfläche (7) der Leitung (5) des Airbagkanals (2) positioniert zu sein, wobei mindestens ein Abschnitt (14) der Kante (13) der Öffnung (4) strukturell so ausgelegt ist, dass er mindestens einerseits einen ersten Auflagepunkt (141) gegen eine Fläche des Umfangsrands (11) des Airbagkanals (2) und andererseits einen zweiten Auflagepunkt (142) gegen das vorstehende Element (12), das an der Außenfläche (7) der Leitung (5) des Airbagkanals (2) positioniert ist, umfasst.

2. System (1) zur Montage eines Airbagkanals (2) in einer Öffnung (4) einer Stützplatte (3) nach Anspruch 1, **dadurch gekennzeichnet, dass** in einer Schnittebene senkrecht zur Ebene der Innenverkleidungsstützplatte (3) des Fahrzeugs mindestens ein Abschnitt der Kante (13) der Öffnung (4) der Stützplatte (3) Folgendes umfasst: einerseits eine Verbindung (131) mit der Stützplatte (3), die im Bereich des Umfangsrands (11) des Airbagkanals (2) positioniert ist, und andererseits eine freie Kante (132) im Bereich eines vorstehenden Elements (12), das an der Außenfläche (7) der Leitung (5) des Airbagkanals (2) positioniert ist.

3. System (1) zur Montage eines Airbagkanals (2) in einer Öffnung (4) einer Stützplatte (3) nach Anspruch 1, **dadurch gekennzeichnet, dass** in einer Schnittebene senkrecht zur Ebene der Innenverkleidungsstützplatte (3) des Fahrzeugs mindestens ein Abschnitt der Kante (13) der Öffnung (4) der Stützplatte (3) Folgendes umfasst: einerseits eine Verbindung (131) mit der Stützplatte (3), die im Bereich eines vorstehenden Elements (12) positioniert ist, das an der Außenfläche (7) der Leitung (5) des Airbagkanals (2) positioniert ist, und andererseits eine freie Kante (132) im Bereich des Umfangsrands (11) des Airbagkanals (2).

4. System (1) zur Montage eines Airbagkanals (2) in einer Öffnung (4) einer Stützplatte (3) nach einem der vorangehenden Ansprüche, **dadurch gekennzeichnet, dass** der Airbagkanal (2) eine Flexibilität eines seiner Teile durch Verschiebung entlang einer Achse, die im Wesentlichen parallel zur Achse der Leitung (5) des Airbagkanals (2) verläuft, aufweist.

5. System (1) zur Montage eines Airbagkanals (2) in einer Öffnung (4) einer Stützplatte (3) nach einem der vorangehenden Ansprüche, **dadurch gekennzeichnet, dass** die Kante (13) der Öffnung (4) der Innenverkleidungsstützplatte (3) eine Flexibilität durch Verschiebung entlang einer Achse, die im Wesentlichen parallel zur Achse der Leitung (5) des Airbagkanals (2) verläuft, aufweist.

6. System (1) zur Montage eines Airbagkanals (2) in einer Öffnung (4) einer Stützplatte (3) nach einem der Ansprüche 1 bis 5, **dadurch gekennzeichnet, dass** das vorstehende Element (12) des Airbagkanals (2) in Form einer Reliefstruktur ausgeführt ist, die über mindestens einen Abschnitt der Außenfläche (7) der Leitung (5) des Airbagkanals (2) angeordnet ist, wobei mindestens ein Abschnitt der Reliefstruktur in einer Ebene angeordnet ist, die im Wesentlichen parallel zur Ebene des Umfangsrands (11) des Airbagkanals (2) verläuft.

7. System (1) zur Montage eines Airbagkanals (2) in einer Öffnung (4) einer Stützplatte (3) nach einem der Ansprüche 1 bis 5, **dadurch gekennzeichnet, dass** das vorstehende Element (12) an der Außenfläche (7) der Leitung (5) des Airbagkanals (2) in Form einer Blockierschnittstelle (15) ausgeführt ist, die dazu ausgelegt ist, mit einer Fläche der Kante (13) der Öffnung (4) der Stützplatte (3) zusammenzuwirken, wobei die Blockierschnittstelle (15) mit einer Struktur (16) zur Verbindung mit der Außenfläche (7) der Leitung (5) des Airbagkanals (2) verbunden ist, wobei diese Verbindungsstruktur (16) ein Drehen der Blockierschnittstelle (15) um eine Achse ermöglicht, die im Wesentlichen parallel zur Achse der Leitung (5) des Airbagkanals (2) ist, die durch die Öffnung (4) der Stützplatte (3) positioniert ist.

8. System (1) zur Montage eines Airbagkanals (2) in einer Öffnung (4) einer Stützplatte (3) nach einem der vorangehenden Ansprüche, **dadurch gekennzeichnet, dass** der Airbagkanal (2) zwischen dem Umfangsrand (11) und dem vorstehenden Element (12) mindestens eine Lippe (17) umfasst, die entlang mindestens eines Abschnitts der Außenfläche (7) der Leitung (5) des Airbagkanals (2) und in einer Ebene positioniert ist, die im Wesentlichen parallel zur Ebene des Umfangsrands (11) und senkrecht zur Hauptachse der Leitung (5) des Airbagkanals (2) verläuft, wobei die Lippe (17) eine Länge von der Außenfläche (7) der Leitung (5) des Airbagkanals (2) aufweist, die ausreicht, damit ihr Umfangsende mit einem Abschnitt der Kante (13) der Öffnung (4) der Stützplatte (3) in Wechselwirkung tritt.

9. System (1) zur Montage eines Airbagkanals (2) in einer Öffnung (4) einer Stützplatte (3) nach einem der vorangehenden Ansprüche, **dadurch gekennzeichnet, dass** in der Nähe der Kante der Öffnung (4) die Oberfläche der Innenverkleidungsstützplatte (3) des Fahrzeugs eine Variation ihrer Ebenheit in Form einer Konkavität aufweist, deren Neigung und/oder Tiefe und/oder Abmessung im Wesentlichen komplementär zur Form und/oder Dicke und/oder Abmessung des Umfangsrands (11) sind, der am Umfang der Außenöffnung (8) der Leitung (5) des Airbagkanals (2) positioniert ist.

10. Baugruppe mit mindestens einem System (1) zur Montage eines Airbagkanals (2) in einer Öffnung (4) einer Stützplatte (3) nach einem der Ansprüche 1 bis 9, wobei der Airbagkanal (2) mit einer Klappe (9) zum Verschließen der Außenöffnung (8) versehen ist, **dadurch gekennzeichnet, dass** die Baugruppe mindestens auch eine Schicht aus spritzbarem oder durch Gießen aufbringbarem Material (18) vom Typ Schaum oder Harz umfasst, die auf der Oberfläche der Innenverkleidungsstützplatte (3) des Fahrzeugs, auf dem Umfangsrand (11) des Airbagkanals (2) und auf mindestens einer Klappe (9) zum Verschließen seiner Außenöffnung (8) positioniert ist.

11. Verfahren zur Verwirklichung eines Systems (1) zur Montage eines Airbagkanals (2) in einer Öffnung (4) einer Stützplatte (3) nach einem der Ansprüche 1 bis 9 zur Bildung einer Baugruppe nach Anspruch 10, **dadurch gekennzeichnet, dass** das Verfahren Folgendes umfasst:
- einen Schritt des Einführens mindestens eines Abschnitts der Leitung (5) eines Airbagkanals (2) durch die Öffnung (4) der Innenverkleidungsstützplatte (3) des Fahrzeugs,
- einen Schritt des Positionierens einerseits des Umfangsrands (11) am Umfang der Außenöffnung (8) des Airbagkanals (2) und andererseits mindestens eines vorstehenden Elements (12) der Außenfläche (7) der Leitung (5), wobei sich der Umfangsrand (11) und das vorstehende Element (12) auf beiden Seiten der Innenverkleidungsstützplatte (3) des Fahrzeugs befinden,
- einen Schritt des Einspannens der Kante der Öffnung (4) der Verkleidungsstützplatte (3) durch den Umfangsrand (11) am Umfang der Außenöffnung (8) des Airbagkanals (2) und das mindestens eine vorstehende Element (12) der Außenfläche (7) der Leitung (5),
- einen Schritt des Gießens oder Spritzens eines Materials (18) auf die Oberfläche der Innenverkleidungsstützplatte (3) des Fahrzeugs, auf den Umfangsrand (11) des Airbagkanals (2) und/oder auf die mindestens eine Klappe (9) zum Verschließen seiner Außenöffnung (8).

## Claims

1. System for assembling (1) an airbag channel (2) in an orifice (4) of a vehicle interior cladding support panel (3), the airbag channel (2) taking the form of an axial duct (5) which comprises, on the one hand, an inner face (6) and an outer face (7) and, on the other hand, an outer orifice (8) situated at a first end of the duct (5) and intended to be associated with at least one shutter (9) to be positioned towards the inside of the vehicle and an inner orifice (10) situated at a second end of the duct (5) and intended to be positioned at the airbag module in which the airbag cushion is placed, folded down before the deployment thereof, the vehicle interior cladding support panel (3) having a support surface and an orifice (4) arranged for the positioning of an airbag channel (2), wherein the assembly system (1) comprises at least:
- on the airbag channel (2):
• a peripheral rim (11) positioned on the perimeter of the outer orifice (8) of the airbag channel and disposed so as to cover a portion of the surface of the interior cladding panel (3) situated at the edge of the orifice (4) of the support panel (3),
• at least one protruding element (12) positioned on the outer face (7) of the duct (5), **characterized in that**
- at the edge of the orifice (4) of the vehicle interior cladding support panel (3), at least a portion (14) of the edge (13) of the orifice (4) structurally configured to be positioned, on the one hand, opposite the outer face (7) of the duct (5) of the airbag channel (2) and, on the other hand, between the peripheral rim (11) and the protruding element (12) of the outer face (7) of the duct (5) of the airbag channel (2), at least a portion (14) of the edge (13) of the orifice (4) is structurally configured so as to comprise at least, on the one hand, a first bearing point (141) bearing against a face of the peripheral rim (11) of the airbag channel (2) and, on the other hand, a second bearing point (142) bearing against the protruding element (12) positioned on the outer face (7) of the duct (5) of the airbag channel (2).

2. System for assembling (1) an airbag channel (2) in an orifice (4) of a support panel (3) according to Claim 1, **characterized in that**, in a sectional plane at right angles to the plane of the vehicle interior cladding support panel (3), at least a portion of the edge (13) of the orifice (4) of the support panel (3) comprises, on the one hand, a join (131) with the support panel (3) positioned at the peripheral rim (11) of the airbag channel (2) and, on the other hand, a free edge (132) at a protruding element (12) positioned on the outer face (7) of the duct (5) of the airbag channel (2).

3. System for assembling (1) an airbag channel (2) in an orifice (4) of a support panel (3) according to Claim 1, **characterized in that**, in a sectional plane at right angles to the plane of the vehicle interior cladding support panel (3), at least a portion of the edge (13) of the orifice (4) of the support panel (3) comprises, on the one hand, a join (131) with the support panel (3) positioned at a protruding element (12) positioned on the outer face (7) of the duct (5) of the airbag channel (2) and, on the other hand, a free edge (132) at the peripheral rim (11) of the airbag channel (2).

4. System for assembling (1) an airbag channel (2) in an orifice (4) of a support panel (3) according to one of the preceding claims, **characterized in that** the airbag channel (2) exhibits a flexibility of one of its parts by displacement on an axis substantially parallel to the axis of the duct (5) of the airbag channel (2).

5. System for assembling (1) an airbag channel (2) in an orifice (4) of a support panel (3) according to one of the preceding claims, **characterized in that** the edge (13) of the orifice (4) of the interior cladding support panel (3) exhibits a flexibility by displacement on an axis substantially parallel to the axis of the duct (5) of the airbag channel (2) .

6. System for assembling (1) an airbag channel (2) in an orifice (4) of a support panel (3) according to one of Claims 1 to 5, **characterized in that** the protruding element (12) of the airbag channel (2) is produced in the form of a relief structure disposed on at least a portion of the outer face (7) of the duct (5) of the airbag channel (2), at least a portion of the relief structure being disposed in a plane substantially parallel to the plane of the peripheral rim (11) of the airbag channel (2).

7. System for assembling (1) an airbag channel (2) in an orifice (4) of a support panel (3) according to one of Claims 1 to 5, **characterized in that** the relief element (12) on the outer face (7) of the duct (5) of the airbag channel (2) is produced in the form of a blocking interface (15) configured to interact with a face of the edge (13) of the orifice (4) of the support panel (3), this blocking interface (15) being associated with a junction structure (16) with the outer face (7) of the duct (5) of the airbag channel (2), this junction structure (16) allowing a pivoting of the blocking interface (15) about an axis substantially parallel to the axis of the duct (5) of the airbag channel (2) positioned through the orifice (4) of the support panel (3).

8. System for assembling (1) an airbag channel (2) in an orifice (4) of a support panel (3) according to one of the preceding claims, **characterized in that** the airbag channel (2) comprises, between the peripheral rim (11) and the protruding element (12), at least one lip (17) disposed along at least a portion of the outer face (7) of the duct (5) of the airbag channel (2) and on a plane substantially parallel to the plane of the peripheral rim (11) and at right angles to the main axis of the duct (5) of the airbag channel (2), the lip (17) comprising a sufficient length from the outer face (7) of the duct (5) of the airbag channel (2) for its peripheral end to interact with a portion of the edge (13) of the orifice (4) of the support panel (3) .

9. System for assembling (1) an airbag channel (2) in an orifice (4) of a support panel (3) according to one of the preceding claims, **characterized in that**, in proximity to the edge of the orifice (4), the surface of the vehicle interior cladding support panel (3) exhibits a variation of its flatness in the form of a concavity, the slope and/or the depth and/or the dimension of which substantially complement the form and/or the thickness and/or the dimension of the peripheral rim (11) positioned on the perimeter of the outer orifice (8) of the duct (5) of the airbag channel (2).

10. Assembly comprising at least one system for assembling (1) an airbag channel (2) in an orifice (4) of a support panel (3) according to one of Claims 1 to 9, wherein the airbag channel (2) is associated with a shutter (9) of the outer orifice (8), **characterized in that** the assembly comprises at least also one layer of material (18) that can be injected or deposited by pouring, of foam or resin type, positioned on the surface of the vehicle interior cladding support panel (3), on the peripheral rim (11) of the airbag channel (2) and on at least one shutter (9) of its outer orifice (8).

11. Method for implementing a system for assembling (1) an airbag channel (2) in an orifice (4) of a support panel (3) according to one of Claims 1 to 9 in order to produce an assembly according to Claim 10, **characterized in that** the method comprises:
- a step of insertion of at least a portion of the duct (5) of an airbag channel (2) through the orifice (4) of the vehicle interior cladding support panel (3),
- a step of positioning, on the one hand, of the peripheral rim (11) on the perimeter of the outer orifice (8) of the airbag channel (2) and, on the other hand, of at least one protruding element (12) of the outer face (7) of the duct (5), the peripheral rim (11) and the protruding element (12) being on either side of the vehicle interior cladding support panel (3),
- a step of clamping of the edge of the orifice (4) of the cladding support panel (3) by the peripheral rim (11) on the perimeter of the outer orifice (8) of the airbag channel (2) and the at least one protruding element (12) of the outer face (7) of the duct (5),
- a step of pouring or of injection of a material (18) on the surface of the vehicle interior cladding support panel (3), on the peripheral rim (11) of the airbag channel (2) and/or on the at least one shutter (9) of its outer orifice (8).
